(19) **Europäisches Patentamt**

**European Patent Office**

**Office européen des brevets**

(11) **EP 1 267 326 B1**

(12) **EUROPEAN PATENT SPECIFICATION**

(45) Date of publication and mention
of the grant of the patent:
**04.08.2004 Bulletin 2004/32**

(51) Int Cl.⁷: **G10L 15/18**

(21) Application number: **02253325.1**

(22) Date of filing: **13.05.2002**

(54) **Artificial language generation**

Erzeugung einer künstlichen Sprache

Generation d'un language artificiel

(84) Designated Contracting States:
**DE FI FR GB SE**

(30) Priority: **12.06.2001 GB 0114236**

(43) Date of publication of application:
**18.12.2002 Bulletin 2002/51**

(73) Proprietor: **Hewlett-Packard Company**
**Palo Alto, CA 94304 (US)**

(72) Inventors:
• **Hinde, Stephen John**
**Redland, Bristol BS6 7DH (GB)**
• **Belrose, Guillaume**
**Montague Hill South, Bristol BS2 8HS (GB)**
• **McTernan, Michael Christopher**
**Nr. Carnforth, Lancashire LA6 1DR (GB)**

(74) Representative: **Squibbs, Robert Francis**
**Hewlett-Packard Limited**
**IP Section**
**Building 3**
**Filton Road**
**Stoke Gifford Bristol BS34 8QZ (GB)**

(56) References cited:
**US-B1- 6 192 337**

• **STEPHEN HINDE, GUILLAUME BELROSE:
"Computer Pidgin Language: A new language to
talk to your computer?"
HTTP://WWW.HPL.HP.COM/TECHREPORTS/20
01/HPL -2001-182.HTML, 30 July 2001
(2001-07-30), XP002207859 Bristol**
• **GEYER-SCHULZ A: "Compound derivations in
fuzzy genetic programming" 1996 BIENNIAL
CONFERENCE OF THE NORTH AMERICAN
FUZZY INFORMATION PROCESSING SOCIETY -
NAFIPS (CAT. NO.96TH8171), PROCEEDINGS
OF NORTH AMERICAN FUZZY INFORMATION
PROCESSING, BERKELEY, CA, USA, 19-22
JUNE 1996, pages 510-514, XP002207860 1996,
New York, NY, USA, IEEE, USA ISBN:
0-7803-3225-3**

## Description

### Field of the Invention

The present invention relates to the generation and evaluation of artificial languages and, in particular but not exclusively, to the generation and evaluation of artificial languages for facilitating the automated recognition of speech.

### Background of the Invention

The new driver of mobility and appliance computing is creating a strong business pull for efficient human computer interfaces. In this context, speech interfaces have many potential attractions such as naturalness and hands-free operation. However, despite 40 years of spoken language systems work, it has proved very hard to train a computer in a human language so that it can have a dialogue with a human. Even the most advanced spoken language systems in the best research groups in the world still suffer the same inadequacies and problems as less advanced speech systems, namely, high set up cost, low efficiency and small domains of discourse.

The present invention concerns an approach to improving speech interfaces that involves the use of artificial language(s) to facilitate automated speech recognition.

Of course, all language is man-made, but artificial languages are made systematically for some particular purpose. They take many forms, from mere adaptations of an existing writing system (numerals), through completely new notations (sign language), to fully expressive systems of speech devised for fun (Tolkien) or secrecy (Poto and Cabenga) or learnability (Esperanto).There have also been artificial languages produced of no value at all such as Dilingo and even artificial language toolkits.

Esperanto, which is probably the best known artificial language, was invented by Dr. Ludwig L. Zamenhof of Poland, and was first presented to the public in 1887. Esperanto has enjoyed some recognition as an international language, being used, for example, at international meetings and conferences. The vocabulary of Esperanto is formed by adding various affixes to individual roots and is derived chiefly from Latin, Greek, the Romance languages, and the Germanic languages. The grammar is based on that of European languages but is greatly simplified and regular. Esperanto has a phonetic spelling. It uses the symbols of the Roman alphabet, each one standing for only one sound. A simplified revision of Esperanto is Ido, short for Esperandido. Ido was introduced in 1907 by the French philosopher Louis Couturat, but it failed to replace Esperanto.

In 'Compound Derivations in Fuzzy Genetic Programming', from A. Geyer-Schulz in NAFIPS'96, the concept of using genetic programming for generating automatically equivalence transformations on the grammar of a context-free language is introduced.

None of the foregoing artificial languages is adapted for automated speech recognition.

Our co-pending UK Patent Application No. 0031450.0 (22 December 2000) describes a class of artificial spoken languages that can be easily understood by automated speech recognizers associated with equipment, such languages being intended to be learnt by human users in order to speak to the equipment. These spoken languages are hereinafter referred to as "Computer Pidgin Languages" or "CPLs", because like Pidgin languages in general, they are simplified in terms of vocabulary and structure. However, unlike normal human pidgin languages, the CPLs are languages specifically designed to minimize recognition errors by automated speech recognizers. In particular, a CPL language is made up of phonemes or other uttered elements that, at least in combination, are not easily confused with each other by a speech recognizer, the uttered elements being preferably chosen from an existing language.

In the above-referenced UK Patent Application a basic method is described for generating new CPLs. It is an object of the present invention to provide improved methods of generating CPLs and evaluating their worth.

### Summary of the Invention

According to the present invention there is provided a method of generating an artificial language, wherein a genetic algorithm is used to evolve a population of individuals over a plurality of generations, the individuals forming or being used to form candidate artificial-language words which are evaluated against a predetermined fitness function with the results of this evaluation being used by the genetic algorithm to select individuals to be evolved to form the next generation of the population.

Advantageously, the individuals of the population are:

- candidate artificial-language words; or
- recipes for forming respective vocabularies of candidate artificial-language words; or
- vocabularies of candidate artificial-language words.

Preferably, the fitness function comprises a combination of:

- a measure of the ease of correct recognition of a candidate artificial-language word when spoken to a speech recognition system; and
- a measure of the similarity of a candidate artificial-language word to any constituent word of a set of reference words as measured by a speech recognition system to which said word is spoken.

According to another aspect of the present invention, there is provided apparatus for generating an artificial language, comprising:

- storage means for storing a population of individuals, and
- genetic-algorithm processing means comprising:

  - providing means for providing candidate artificial-language words from the individuals of the population stored in the storage means;
  - evaluation means for evaluating the candidate artificial-language words using a predetermined fitness function;
  - evolution means, responsive to the evaluation carried out by the evaluation means, to select individuals from said population and to use them in forming a next generation of the population that is then stored back in the storage means; and
  - control means for controlling operation of the processing means to evolve the population of individuals over a plurality of generations.

## Brief Description of the Drawings

Embodiments of the invention will now be described, by way of non-limiting example, with reference to the accompanying diagrammatic drawings, in which:

- **Figure 1** is a diagram illustrating a system for creating a new CPL according to a process described in the above-referenced patent application;
- **Figure 2** is a diagram illustrating an arrangement for testing the fitness of candidate CPL words;
- **Figure 3** is a diagram illustrating a first process for generating a new CPL using a genetic algorithm approach; and
- **Figure 4** is a diagram illustrating a second process for generating a new CPL, also using a genetic algorithm approach.

## Best Mode of Carrying Out the Invention

As already indicated, the present invention concerns the creation and evaluation of spoken artificial languages (CPLs) that are adapted to be recognised by speech recognisers. A new CPL can be created as required, for example, for use with a new class of device.

In our above-referenced co-pending Application, a method of creating a new CPL is described that involves following the simple rules set out below:

1. Pick a subset of phonemes from a specific human language (such as English or Esperanto) that are not easily confused one with another by an automated speech recognition, and are easily recognized. This subset may exhibit a dependency on the speech recognition technology being used; however, since there is generally a large overlap between the subsets of easily recognized phonemes established with different recognition technologies, it is generally possible to choose a subset of phonemes from this overlap area. It should also be noted that the chosen phoneme subset need not be made up of phonemes all coming from the same human language, this being done simply to make the subset familiar to a particular group of human users.

2. Make words up that are easily recognized and distinguished using the phonemes from the subset chosen in (1). The constructed words are, for example, structured as CVC (Consonant Vowel Consonant) like Japanese as this structure is believed to perform best in terms of recognition. Other word structures, such as "CV", are also possible.

3. Pick a filler sound that allows word boundaries to be easily distinguished (this step is optional, particularly where words are intended only to be used individually since silence then constitutes an effective filler).

4. Pick a simple grammar structure with very little ambiguity (again, this step is optional in the sense that where a CPL is based on single word commands, no grammar is required - other than that the command words are to be taken individually).

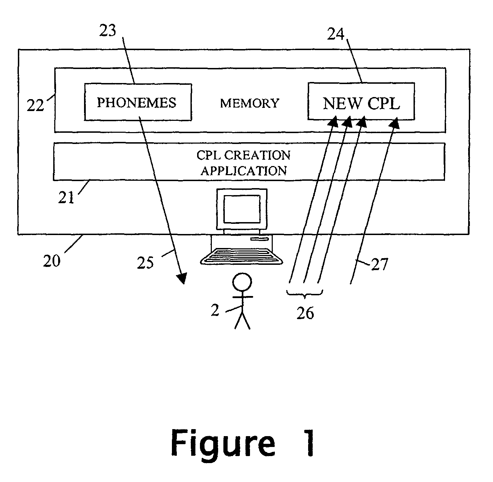

As described in the above-referenced Application, in order to select a low-confusion-risk phoneme subset, a phone confusion matrix can be produced for a particular speech recognizer by comparing the input and output of the recognizer over a number of samples. This matrix indicates for each phone the degree of correlation with all the other phones. In other words, this matrix indicates the likelihood of a phone being mistaken for another during the recognition process. An example confusion matrix produced from a British English corpus forms Figure 1 of the above-referenced Application. By examining the matrix, it is readily possible to ascertain which pairings of phonemes should be avoided if confusion is not to result.

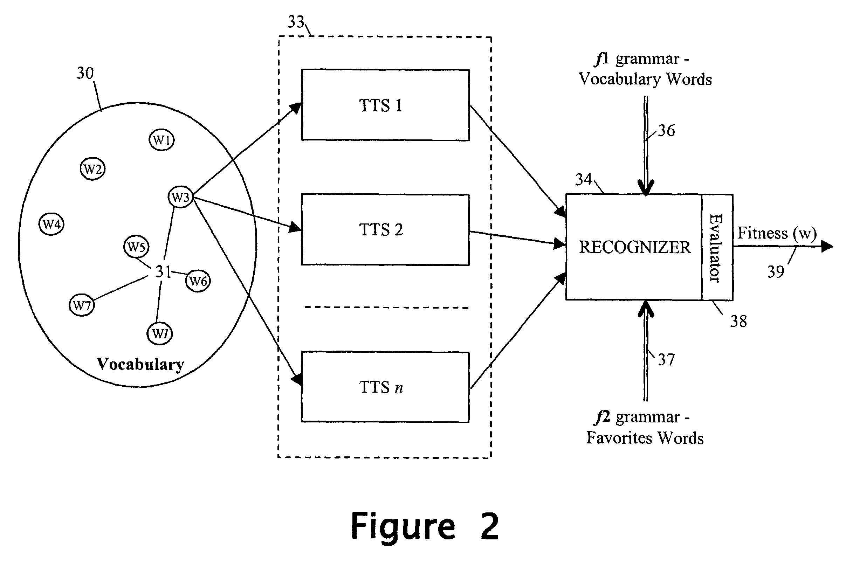

Figure 1 of the accompanying drawings (which also forms Figure 2 of the above-referenced application) illustrates a system 20 by which a user 2 can generate a new CPL according to the process described above. The system 20 is based on a computer running a CPL creation application 21 and storing in memory 22 the low-confusion-risk phoneme subset 23 for a language base (such as British English) selected by the user. This phoneme subset is presented to the user 2 (see arrow 25) who then uses the phonemes as building blocks for constructing new words which are stored back to memory (see arrows 26) as part of the new CPL 24. The user can also specify a grammar for the new CPL, this grammar being stored (see arrow 27) as part of the CPL. The system is also arranged to test out the chosen words for ease of recognition and lack of confusion on a target speech recognizer, the results of this test being fed back to the user; this testing can either be done automatically (for example, whenever a new word is stored) or simply upon user request. Whilst the human meaning associated with a CPL word is likely to be attributed at this stage (the CPL word may suggest this meaning in the base language), this is not essential.

Whilst the above process and system for generating a CPL is capable of producing useful results, it is not well adapted to produce really efficient CPLs or to take account of criteria additional to low-confusion and ease of recognition.

As will be described below, the present invention provides fitness measures of candidate CPL words, and automated processes for CPL generation based on the use of genetic algorithm (GA) techniques.

**Fitness Measures**

The GA-based CPL generation methods to be described both involve the application of a fitness function to candidate CPL words in order to select individuals to be evolved. In the present case, the fitness function is combination of a first fitness measure $f1$ concerning a first criteria (criteria 1) that candidate CPL word should be easy to recognize correctly by an automatic speech recognizer (ASR) system, and a second fitness measure $f2$ concerning a second criteria (criteria 2) that the word should be easy for a human to learn and remember.

Figure 2 depicts the general process involved in evaluating both the first and second fitness measures. To evaluate a word 31 from a vocabulary 30 of L words (W 1 to W$l$), the word is spoken to an ASR system 34 and a fitness measure is produced by evaluator 38 on output 39 according to fitness measure $f1$ or $f2$. Whilst the word being evaluated could in theory be spoken by a human to the ASR system 34, practicality requires that a text-to-speech (TTS) system 33 is used, here shown as composed of n TTS engines TTS1 - TTSn for reasons which will become apparent below.

First Fitness Measure

More particularly, in evaluating the first fitness measure $f1$ (how well a word is recognized), the ASR system 34 is installed with a speech grammar setting the ASR system to recognise all the $L$ words from the vocabulary 30 (arrow 36). Thus, typically, the grammar takes the form:

    Sentence = word1 | word2 | word3 .... | word$l$;
    Word1 = "blurp";
    ...
    Wordn = "kligon";

The evaluator 38, in applying the first fitness measure, takes account of whether or not a word is correctly recognised and the confidence score associated with recognition (the confidence score being generated by the ASR system 34 and, in the present example, being assumed to be in the range of -100 to +100 as provided by the Microsoft Speech API). More specifically, for a given word $w$, the first fitness measure $f1(w)$ evaluates as follows:

| | |
|---|---|
| $rec1(w)$: | 1 if the recognizer recognises $w$ when the input is actually w, 0 otherwise; |
| $score1\ (w)$: | the confidence score attributed to this word by the ASR system. |

$$f1(w) = rec1(w) * (100 + score1(w))$$

This evaluation is effected by evaluator 38. Where multiple TTS engines are provided, for each word each engine speaks the word in turn and the evaluator 38 combines the resultant measures produces for each engine to provide an overall first fitness measure for the word concerned.

Second Fitness Measure

The second fitness measure $f2$ evaluates how easy a word is to learn and to remember by the user. This notion is quite difficult to assess and in the present case is based on the premise that it will easier for a user to learn and use words that sound familiar to him. Such words are captured by having the user set up a list of the words he likes to hear (called "*favorites*"); alternatively, a core of common real words can be used for this list (for example, if the user does not want to take the time to specify a personal favorites list). The fitness measure $f2$ evaluates how similar a CPL word is to any word from the *favorites* list. To measure this similarity, the ASR system 34 is installed with a grammar that can recognize any words from the *favorites* list (arrow 37). The ASR system is then used to try to recognise words from the vocabulary 30. For a given word $w$, the second fitness measure $f2(w)$ evaluates as follows:

| | |
|---|---|
| rec2(w): | 1 if the ASR recognized any word from favorites while listening to w, 0 otherwise. |
| $score2(w)$: | the confidence score. |

$$f2(w) = rec2(w) * (100 + score2(w))$$

For a word w, the higher $f2(w)$, the more similar $w$ is to a word from the *favorites* list (no matter which one). For example

| | |
|---|---|
| ***favorites*** = | {boom, cool, table, mouse} |
| f2("able") = | 100 (was mistaken for "table") |
| f2("spouse") = | 60 (was mistaken for mouse) |
| f2("bool") = | 81 (was mistaken for cool) |
| f2("smooth") = | 46 (was mistaken for boom) |

f2("steve") =    0
f2("Robert") =    0
f2("paul") =      34 (was mistaken for cool)

Combining the Measures

The first and second fitness measures are combined, for example, by giving each a weight and adding them. The weighting is chosen to give, for instance, more importance to *f1* than to *f2*.

Introducing Additional Factors

It is possible to cause the fitness measures to take account of certain potentially desirable characteristics by appropriately setting up the evaluation channel (TTS system to ASR system). For example, in order to provide a CPL vocabulary that is speaker-gender independent, multiple TTS engines are provided (as illustrated) corresponding to different genders with the result that the fitness measures will reflect performance for all genders. Similarly:

- Acoustic independence can be included as a factor by testing the spoken words with multiple ASR engines corresponding to different acoustic models;
- Robustness to noise can be included as a factor by introducing some noise into the spoken version of words.

**Generation of the CPL Vocabulary**

Two GA-based methods for generating CPL words will now be described, both these methods employing the above-described fitness function combining the first and second fitness measures.

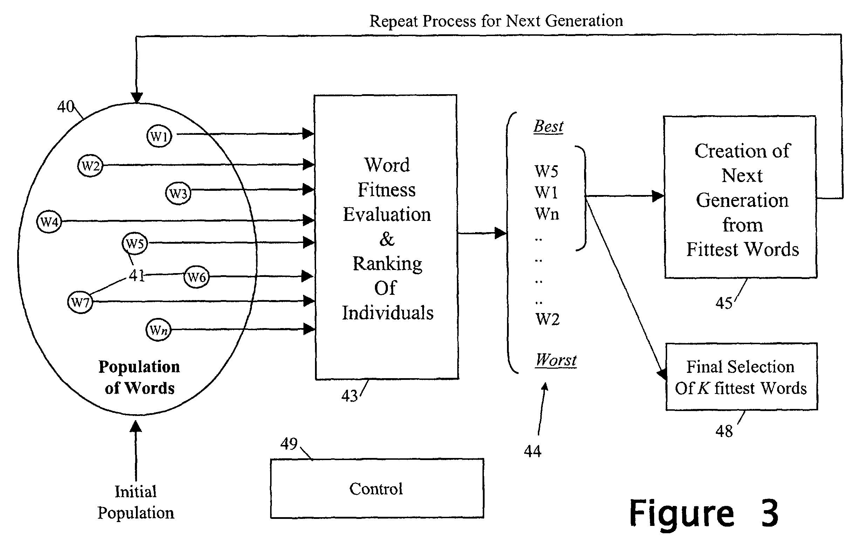

Word Coding Population (Figure 3)

In this CPL generation method, a population 40 is composed of individuals 41 that each constitute a candidate CPL word W1 - W*l*. Each individual is coded as a character string (the "DNA" of the individual), for example:

DNA(W1) =     "printer",
DNA(W2) =     "switch off".

A word is coded using a maximum of p letters chosen from the alphabet. There are $27^p$ possible combinations (26 + the * wild card letter, standing for no letter). The initial set of words is made of *L* words from a vocabulary of English words (i.e. "print", "reboot", "crash", "windows", etc.) where *L > K, K* being the required number of words in the target CPL vocabulary to be generated.

Starting with the initial population, the fitness of the individual words 41 of the population 40 is evaluated using the above-described fitness function (weighted measures f1 and f2) and the individual words ranked (process 43 in Figure 3) to produce ranking 44. The fittest individuals are then selected and used to create the next generation of the population, by applying genetic operations by mutation and/or cross-over and/or reproduction (box 45). Mutation consists of changing one or more letters in the DNA of a word, for example:

DNA= "printer" → "crinter".

Cross-over consists of exchanging fragments of DNA between individuals, for instance:

"Printer" "Telephone" → "Prinphone" "Teleter".

The application of these genetic operators is intended to result in the creation of better individuals by exchanging features from individuals that have a good fitness.

The foregoing process is then repeated for the newly generated population, this cycle being carried either a predetermined number of times or until the overall fitness of successive populations stabilizes. Finally, the *K* best individuals (words) are selected from the last population (block 48) in order to form the CPL vocabulary. The overall process is controlled by control block 49.

The above CPL generation method can be effected without placing any constraints on the form of the words generated by the block 45; however, it is also possible, and potentially desirable, to place certain constraints on word form such as, for example, that consonants and vowels must alternate.

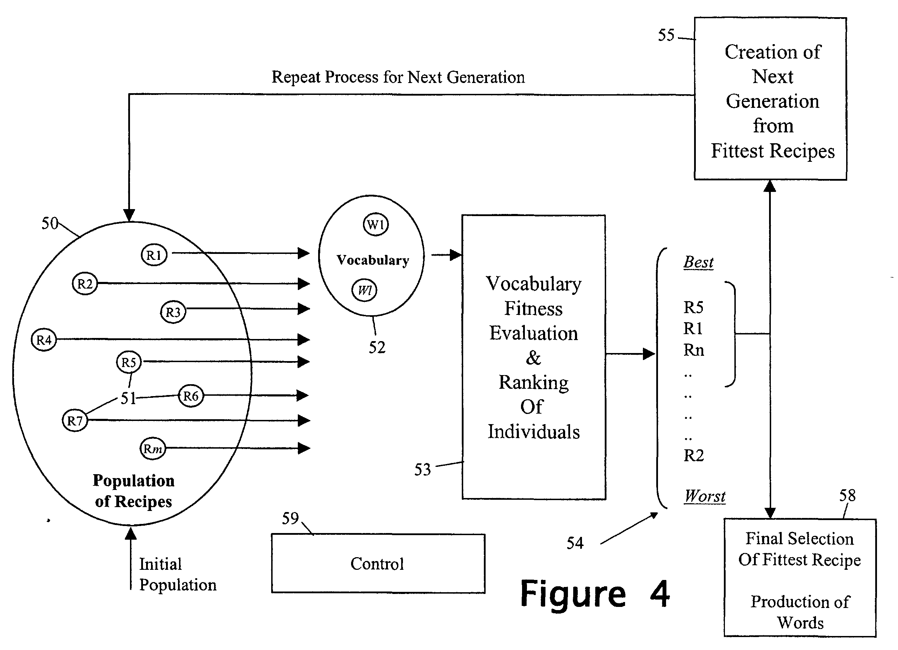

Vocabulary Coding Population (Figure 4)

In this CPL generation method, a population 50 is composed of *m* individuals 51 that each constitute a recipe for generating a respective vocabulary of candidate CPL words. The parameters of a recipe are, for example,:

○ Format of the words that can be created
   Example: C V Any-Letter C V
   where C=consonant and V=vowel
○ set of vowels available for use in word generation
○ set of consonant available for use in word generation

with an example individual being:

Format =     C V Any-Letter C V
C set =      {b,c,d,f,h,k,l,p}
V set =      {a,l,o,u}

This individual could create the words
   Balka, coupo, etc...

For each generation of the population, each individual 51, that is, each recipe R1 - R*m*, is used to randomly generate a respective vocabulary 52 of *L* words W1-W*l*. These words are then each evaluated (block 53) using the above-described fitness function (weighted measures *f*1, *f*2) and an average score produced for all words in the vocabulary 52. This score is taken as a measure of the fitness of the recipe concerned and is used to rank the recipes into ranking 54. The fittest recipes are then selected and used to produce the next generation of the recipe population (see block 55) by mutation and/or cross-over and/or reproduction; in other words, these genetic operators are used to changes the parameters of the recipes and produce new ways of creating words. The approach is based on the supposition that after many generations, the best individual recipe will create words with the optimal structure and alphabet; however, by way of a check, the fittest individual in each generation is stored and its fitness compared with that of the fittess individual of the at least the next generation, the fittest individual always being retained. The fittest individual produced at the end of the multiple-generation evolution process is then selected and used (block 58) to produce a vocabulary of size *L* from which the fittest *K* words are selected. The overall process is controlled by control block 59.

In a first version of this method, word format is represented by a single parameter, the DNA of an individual taking the form of a sequence of bits that codes this parameter and parameters for specifying the consonant and vowel sets of the recipe, for example:

00　01　10　11　00　111000111100110011000110 110111 Here, the first 12 bits code the structure of words that can be generated:

00 → no character
01 → consonant
10 → vowel
11 → any letter
00 → no character

The next 22 bits code the consonant set with a bit value of "1" at position *i* indicating that the consonant at position *i* in a list of alphabet consonants is available for use in creating words. The remaining 6 bits code the vowel set in the same manner; for example the bit sequence "011011" codes the vowel set of {e, i, u, y}.

Examples of words that can be created according to the above example are:

ora y, aje h

In a second version of this method, each word is made up of a sequence of units each of which has a fixed form. A unit can for example, be a letter, a CV combination, a VC combination, etc. To represent this, each recipe has one parameter for the unit form and a second parameter for the number of units in a word; the recipe also includes, as before, parameters for coding the consonant and vowel sets. In this version of the method, the recipe DNA is still represented as a sequence of bits, for example:

10 110 1001100111001110111110 001100 The first 2 bits indicate the form of each unit

10 → VC unit The next 3 bits code the number of units per word

110 → 6: 6/2+1 = 4 units per word. The next 22 bits code the consonants set whilst the final 6 bits code the vowels set. Example of words created by this example recipe are:

obobifiy, okilimox

**Usages**

Example usages of a CPL are given below

CPL Speed dialing - CPL contact names.

A mobile phone contains a list of contact names and telephone numbers. Each name from this list can be transformed into a CPL version (CPL nickname) by setting these names as favorites during the CPL generation process. A speech recognizer in the mobile phone is set to recognize the nicknames. In use, when a user wishes to contact a person on the contact names list, the user speaks the nickname to initiate dialing. To assist the user in using the correct nickname, the contact list including both real names and nicknames can be displayed on a display of the phone. By way of example, for a list containing the three names Robert, Steve and Guillaume, three CPL nicknames are created: Roste, Guive, Yomer. They appear on the phone screen as:

Roste　　(Robert)
Guive　　(Steve)
Yomer　　(Guillaume)

CPL to SMS transcriber.

In this case, a mobile phone or other text-messaging device is provided with a speech recognizer for recognizing the words of a CPL. The words of the CPL are assigned to commonly used expressions either by default or by user input. In order to generate a text message, the user can input any of these expressions by speaking the corresponding CPL word, the speech recognizer recognizing the CPL word and causing the corresponding expression character string to be input into the message being generated. Typical expressions that might be represented by CPL words are "Happy Birthday" or "See you later."

It will be appreciated that usage of a CPL generated by the methods described herein will generally involve conditioning a speech recogniser to recognise the CPL words by loading the CPL vocabulary into the recogniser and/or training the recogniser on the CPL words. Furthermore, the generated CPL (and/or selected ones of the final generation of individuals) can be distributed to users by any suitable method such as by storing a representation of the CPL words on a transferable storage medium for distribution.

## Variants

It will be appreciated that many variants are possible to the above described embodiments of the invention. For example, the individuals of a population to be evolved could be constituted by respective vocabularies each of *L* candidate CPL words, the initial words for each vocabulary being, for instance, chosen at random (subject, possibly, to a predetermined word format requirement). At each generation, the fitness of each vocabulary of the population is measured in substantially the same manner as for the vocabulary 52 of the Figure 4 embodiment. The least-fit vocabularies are then discarded and new ones generated from the remaining ones by any appropriate combination of genetic operations (for example, copying of the fittest vocabulary followed by mutation and cross-over of the component words). The constituent words of the retained vocabularies may also be subject to genetic operations internally or across vocabularies. This process of fitness evaluation, selection and creation of a new generation, is carried out over multiples cycles and the fittest *K* words of the fittest vocabulary are then used to form the target CPL vocabulary.

In order to speed the creation of a vocabulary with user-friendly words, the words on the favorites list can be used as the initial population of the Figure 3 embodiment, or in the case of the embodiment described in the preceding paragraph, as at least some of the component words of at least some of the initial vocabularies. As regards the Figure 4 embodiment, the constituent consonants and vowels of the words on the favorites list can be used as the initial consonant and vowel sets of the recipes forming the individuals of the initial population.

Whilst the fitness function (weighted measures *f*1, *f*2) in the described embodiments has been used to favour CPL words giving both good speech recogniser performance and user-friendliness (that is, they sound familiar to a user) , the fitness function could be restricted to one of *f*1 and *f*2 to select words having the corresponding characteristic, with the other characteristic then being bred into words by tailoring the subsequent genetic operations for appropriately generating the next-generation population. Thus, if the fitness function was set to measure *f*1, it is possible to bias the generation of CPL words towards user-friendly words by making the application of genetic operations, during the creation of the next generation of individuals, in a manner that favours the creation of such words; this can be achieved, for example, in the application of the cross-over operations, by giving preference to new individuals that possess, or are more likely to generate, phoneme combinations that are user-preferred (such as represented by words on a favorites list) or like-sounding phoneme combinations. Similarly, mutation can be effected in a manner tending to favour user-preferred phoneme or phoneme combinations or like-sounding phoneme or phoneme combinations. As already indicated, it is alternatively possible to arrange for the fitness function to be restricted to *f*2 and then apply the genetic operators in a manner favouring the generation of CPL words that are easy to recognise (that is, have a low confusion risk as indicated, for example, by a confusion matrix derived for the recognizer concerned). In fact, although not preferred, the genetic operators can be applied such s to favour the generation of CPL words that are both easy to recognise automatically and are user-friendly thereby removing the need to use the fitness function to select for either of these characteristics; a further alternative would be to do both this and to effect selection based on a fitness function involving both *f*1 and *f*2.

Another approach to generating words that are both easy to recognise automatically and have a familiarity to a user is simply to alternate the fitness function between *f*1 and *f*2 in successive generation cycles.

Whilst the evaluation method described above with reference to Figure 2 is preferred for effecting measures of ease of recognition and user friendliness of words, other ways of making these measures are also possible. For example, the evaluation of words in terms of how easily they are correctly recognised by a speech recognition system can be effected by analysis of the phoneme composition of the words in relation to a confusion matrix established for a target speech recognition system. As regards the evaluation of words in terms of a familiarity to a human user, this can be effected by analysis of the phoneme composition of the words in relation to that of a set of reference words familiar to a user.

Another possible variant is to select the fitness function so as to directly take account of additional or different fitness criteria, this being in addition to the possibility, discussed above, of introducing factors, such as gender of voice, into the evaluation of *f*1 and/or *f*2. The use of the described GA-based methods of artificial language generation are therefore not restricted to languages optimised for automatic recognition.

## Claims

1.  A method of generating an artificial language, wherein a genetic algorithm is used to evolve a population (40;50) of individuals (41;51) over a plurality of generations, the individuals forming or being used to form candidate artificial-language words (W) which are evaluated using a predetermined fitness function with the results (39) of this evaluation being used by the genetic algorithm (45;55) to select individuals to be evolved to form the next generation of the population (40;50).

2.  A method according to claim 1, wherein said individuals (41) are candidate artificial-language words, the fittest words (W) of each generation being used to produce the words of the next genera-

tion by a process (45) involving at least one of mutation and cross-over.

3.  A method according to claim 2, wherein the production of next-generation words is constrained to cause each such word (W) to have a format in which each constituent consonant or vowel, unless terminating the word, is respectively followed by a vowel or consonant.

4.  A method according to claim 2, wherein each generation of said population (40) is made up *L* individuals (41), the method including a final step of selecting the *K* fittest words of the last generation of the population (40) to form the vocabulary of the artificial language, *L* being greater than *K*.

5.  A method according to claim 1, wherein said individuals (51) are recipes for forming respective vocabularies (52) of candidate artificial-language words (W), the method involving at each generation:

    -   using each individual (51) to form a respective vocabulary (52) the constituent words (W) of which are evaluated using said predetermined fitness function; and
    -   forming from the evaluations of the words in an individual's vocabulary, an evaluation of the fitness of the individual (51); and
    -   using the fittest recipes (51) of each generation to produce the recipes of the next generation by a process (55) involving at least one of mutation and cross-over.

6.  A method according to claim 5, wherein each recipe (51) specifies a word format, and a set of consonants and a set of vowels available for use in word generation according to said format.

7.  A method according to claim 6, wherein said word format comprises a specified unit form and a specified number of units, said units being formed from the available consonants and vowels according to the specified unit form.

8.  A method according to claim 5, wherein the fittest recipe or recipes (51) of each generation are stored for subsequent comparison with those of at least the next generation.

9.  A method according to claim 1, wherein said individuals are respective vocabularies of candidate artificial-language words, the fitness of the words (W) in a said vocabulary being evaluated and used to form an overall fitness measure for that vocabulary, this measure then being used as a basis for selecting which vocabularies are to be evolved to form the next generation of the population.

10. A method according to claim 9, wherein the next generation is formed by replacing at least the least fit vocabulary with a vocabulary derived from at least one of the retained vocabularies.

11. A method according to claim 10, wherein at least some of the words (W) of the retained vocabularies are subject to evolution by genetic operations with other words from the same or different vocabularies.

12. A method according to any one of the preceding claims, wherein said fitness function comprises a measure (*f*1) of the ease of correct recognition of a candidate artificial-language word (W) when spoken to a speech recognition system (34).

13. A method according to any one of claims 1 to 11, wherein said fitness function comprises a measure (*f*2) of the similarity of a candidate artificial-language word (W) to any constituent word of a set of reference words as measured by a speech recognition system (34) to which said word is spoken.

14. A method according to any one of claims 1 to 11, wherein said fitness function comprises a combination of:

    -   a measure (*f*1) of the ease of correct recognition of a candidate artificial-language word (W) when spoken to a speech recognition system (34); and
    -   a measure (*f*2) of the similarity of a candidate artificial-language word (W) to any constituent word of a set of reference words as measured by a speech recognition system (34) to which said word is spoken.

15. A method according to any one of claims 12 to 14, wherein the candidate artificial-language words (W) are spoken to the speech recognition system (34) by multiple text-to-speech converters (33) in turn, the fitness measure (*f*1;*f*2) made in respect of any particular word being a combination of the measures made for the speaking of the word by each converter.

16. A method according to any one of claims 12 to 14, wherein the candidate artificial-language words (W) are spoken by a text-to-speech conversion system (33) to the speech recogniser system (34), the channel involving these systems being implemented in a manner such that said fitness measure takes account of at least one desired operational characteristic.

**17.** A method according to claim 16, wherein said at least one desired operational characteristic is at least one of:

- gender independence, for which purpose the text-to-speech system is provided with multiple text-to-speech converters corresponding to different genders to generate spoken versions of the words;
- acoustic independence, for which purpose the speech recognizer system is provided with multiple speech recognizers corresponding to different acoustic models;
- robustness to noise, for which purpose noise is introduced into the channel.

**18.** A method according to any one of the preceding claims, wherein the evolution of the individuals (41; 51) selected to form the next generation is effected in a manner favouring the creation of candidate artificial-language words having a desired characteristic.

**19.** A method according to claim 18, wherein said desired characteristic is ease of recognition by an automatic speech recognizer

**20.** A method according to claim 18, wherein said desired characteristic is similarity to natural language words.

**21.** A method according to any one of the preceding claims, wherein at least selected ones of the final generation of individuals are stored on a transferable storage medium.

**22.** A method according to any one of the preceding claims, wherein the final generation of individuals (41;51) is used to provide words of said artificial language and representations of these words are stored on a transferable storage medium.

**23.** A method of conditioning a speech recogniser, comprising the steps of:

- generating words (W) of an artificial language using a method according to any one of the preceding claims, and
- loading the generated artificial-language words into a lexicon of the speech recogniser.

**24.** A method of conditioning a speech recogniser, comprising the steps of:

- generating words (W) of an artificial language using a method according to any one of the preceding claims, and
- training the speech recogniser to recognise the generated artificial-language words.

**25.** Apparatus for generating an artificial language, comprising:

- storage means for storing a population (40;50) of individuals (41;51), and
- genetic-algorithm processing means comprising:

  - providing means for providing candidate artificial-language words (W) from the individuals (41;51) of the population (40;50) stored in the storage means;
  - evaluation means (38) for evaluating the candidate artificial-language words using a predetermined fitness function;
  - evolution means (45;55), responsive to the evaluation carried out by the evaluation means (38), to select individuals from said population (40;50) and to use them in forming a next generation of the population that is then stored back in the storage means; and
  - control means (49;59) for controlling operation of the processing means to evolve the population (40;50) of individuals (41;51) over a plurality of generations.

**26.** Apparatus according to claim 25, wherein said individuals (41) are candidate artificial-language words, the evolution means (45) being operative to use the fittest words of each generation to produce the words (W) of the next generation by a process involving at least one of mutation and cross-over.

**27.** Apparatus according to claim 26, wherein the evolution means (45) is constrained to cause each next-generation word to have a format in which each constituent consonant or vowel, unless terminating the word, is respectively followed by a vowel or consonant.

**28.** Apparatus according to claim 26, wherein each generation of said population (40) is made up $L$ individuals, the apparatus further comprising means (48) operative to select the $K$ fittest words of the last generation of the population to form the vocabulary of said artificial language, $L$ being greater than $K$.

**29.** Apparatus according to claim 25, wherein said individuals (51) are recipes for forming respective vocabularies of candidate artificial-language words (W), and wherein at each generation:

- the said providing means is operative to use each recipe (51) to form a respective vocabulary (52);

- the said evaluation means (38) is operative to use said predetermined fitness function to evaluate the constituent words (W) of each vocabulary (52) formed by the providing means and to use the evaluations of the words in each said vocabulary to produce an evaluation of the fitness of the corresponding recipe (51); and
- the evolution means (55) is operative to use the fittest recipes of each generation to produce the recipes (51) of the next generation by a process involving at least one of mutation and crossover.

30. Apparatus according to claim 29, wherein each recipe (51) specifies a word format, and a set of consonants and a set of vowels available for use in word generation according to said format.

31. Apparatus according to claim 30, wherein said word format comprises a specified unit form and a specified number of units, said units being formed from the available consonants and vowels according to the specified unit form.

32. Apparatus according to claim 29, further comprising comparison means operative to compare the fittest recipe or recipes of each generation with those of at least the next generation.

33. Apparatus according to claim 25, wherein said individuals are respective vocabularies of candidate artificial-language words (W), the evaluation means (38) being operative to evaluate the fitness of the words in a said vocabulary and, based on these evaluations, to form an overall fitness measure for that vocabulary; the evolution means being operative to use this fitness measure of each vocabulary as a basis for selecting which vocabularies are to be evolved to form the next generation of the population.

34. Apparatus according to claim 33, wherein the evolution means is operative to form the next generation by replacing at least the least fit vocabulary with a vocabulary derived from at least one of the retained vocabularies.

35. Apparatus according to claim 34, wherein the evolution means is operative to evolve at least some of the words of the retained vocabularies by genetic operations with other words from the same or different vocabularies.

36. Apparatus according to any one of claims 25 to 35, wherein the evaluation means (38) includes a speech recognition system (34), the evaluation means being operative to derive and use as at least part of said fitness function, a measure ($f1$) of the ease of correct recognition of a candidate artificial-language word (W) when spoken to said speech recognition system (34).

37. Apparatus according to any one of claims 25 to 35, wherein the evaluation means includes a speech recognition system (34), the evaluation means being operative to derive and use as at least part of said fitness function, a measure ($f2$) of the similarity of a candidate artificial-language word (W) spoken to said speech recognition system (34) to any constituent word of a set of reference words as measured by said speech recognition system (34).

38. Apparatus according to any one of claims 25 to 35, wherein the evaluation means includes a speech recognition system (34), the evolution means being operative to derive and use in combination for said fitness function, a combination of:

- a measure ($f1$) of the ease of correct recognition of a candidate artificial-language word (W) when spoken to said speech recognition system (34); and
- a measure ($f2$) of the similarity of a candidate artificial-language word (W) spoken to said speech recognition system (34) to any constituent word of a set of reference words as measured by said speech recognition system.

39. Apparatus according to any one of claims 36 to 38, wherein the evaluation means further includes multiple text-to-speech converters (33) operative to speak the candidate artificial-language words (W) to the speech recognition system (34) in turn, the fitness measure ($f1$;$f2$) made in respect of any particular word being a combination of the measures made for the speaking of the word by each converter.

40. Apparatus according to any one of claims 36 to 38, wherein the evaluation means further includes a text-to-speech converter system (33) operative to speak the candidate artificial-language words (W) to the speech recogniser system (34), the channel involving these systems being implemented in a manner such that said fitness measure takes account of at least one desired operational characteristic.

41. Apparatus according to claim 40, wherein said at least one desired operational characteristic is at least one of:

- gender independence, for which purpose the text-to-speech system is provided with multiple text-to-speech converters corresponding to different genders to generate spoken versions of the words;

- acoustic independence, for which purpose the speech recognizer system is provided with multiple speech recognizers corresponding to different acoustic models;

- robustness to noise, for which purpose noise is introduced into the channel.

42. Apparatus according to any one of claims 25 to 41, wherein the evolution means (45;55) is operative to evolve the individuals selected to form the next generation in a manner favouring the creation of candidate artificial-language words having a desired characteristic.

43. Apparatus according to claim 42, wherein said desired characteristic is ease of recognition by an automatic speech recognizer

44. Apparatus according to claim 42, wherein said desired characteristic is similarity to natural language words.

**Patentansprüche**

1. Ein Verfahren zum Erzeugen einer Kunstsprache, bei dem ein genetischer Algorithmus verwendet wird, um eine Population (40; 50) von Individuen (41; 51) über eine Mehrzahl von Generationen zu entwickeln, wobei die Individuen Kandidatenkunstsprachenwörter (W) bilden oder verwendet werden, um dieselben bilden, die unter Verwendung einer vorbestimmten Eignungsfunktion bewertet werden, wobei die Ergebnisse (39) dieser Bewertung durch den genetischen Algorithmus (45; 55) verwendet werden, um Individuen auszuwählen, die entwickelt werden sollen, um die nächste Generation der Population (40; 50) zu bilden.

2. Ein Verfahren gemäß Anspruch 1, bei dem die Individuen (41) Kandidatenkunstsprachenwörter sind, wobei die geeignetsten Wörter (W) jeder Generation verwendet werden, um die Wörter der nächsten Generation zu erzeugen, durch einen Prozeß (45), der zumindest entweder Mutation oder Kreuzung umfaßt.

3. Ein Verfahren gemäß Anspruch 2, bei dem die Herstellung der Wörter der nächsten Generation gezwungen ist, zu verursachen, daß jedes solche Wort (W) ein Format aufweist, in dem jeder zugehörige Konsonant oder Vokal, außer am Ende des Wortes, jeweils von einem Vokal oder Konsonanten gefolgt wird.

4. Ein Verfahren gemäß Anspruch 2, bei dem jede Generation der Population (40) aus L-Individuen (41) hergestellt ist, wobei das Verfahren einen abschließenden Schritt zum Auswählen der K geeignetsten Wörter der letzten Generation der Population (40) umfaßt, um das Vokabular der Kunstsprache zu bilden, wobei L größer ist als K.

5. Ein Verfahren gemäß Anspruch 1, bei dem die Individuen (51) Prozeßvorschriften zum Bilden jeweiliger Vokabularien (52) aus Kandidatenkunstsprachenwörtern (W) sind, wobei das Verfahren bei jeder Erzeugung folgende Schritte umfaßt:

Verwenden jedes Individuums (51), um ein jeweiliges Vokabular (52) zu bilden, wobei die zugehörigen Wörter (W) desselben unter Verwendung der vorbestimmten Eignungsfunktion bewertet werden; und

Bilden einer Bewertung der Eignung des Individuums (51) aus den Bewertungen der Wörter in dem Vokabular eines Individuums; und

Verwenden der geeignetsten Prozeßvorschriften (51) jeder Generation, um die Prozeßvorschriften der nächsten Generation herzustellen, durch einen Prozeß (55), der zumindest entweder Mutation oder Kreuzung umfaßt.

6. Ein Verfahren gemäß Anspruch 5, bei dem jede Prozeßvorschrift (51) ein Wortformat spezifiziert, und einen Satz von Konsonanten und einen Satz von Vokalen, die bei der Worterzeugung gemäß dem Format zur Verwendung verfügbar sind.

7. Ein Verfahren gemäß Anspruch 6, bei dem das Wortformat eine spezifische Einheit-Form und eine spezifische Anzahl von Einheiten aufweist, wobei die Einheiten aus den verfügbaren Konsonanten und Vokalen gemäß der spezifizierten Einheit-Form gebildet sind.

8. Ein Verfahren gemäß Anspruch 5, bei dem die geeignetste Prozeßvorschrift oder Prozeßvorschriften (51) jeder Generation für einen nachfolgenden Vergleich mit denen von zumindest der nächsten Generation gespeichert werden.

9. Ein Verfahren gemäß Anspruch 1, bei dem die Individuen jeweilige Vokabularien der Kandidatenkunstsprachenwörter sind, wobei die Eignung der Wörter (W) in einem Vokabular bewertet und verwendet wird, um ein Gesamteignungsmaß für dieses Vokabular zu bilden, wobei dieses Maß dann als eine Basis zum Auswählen verwendet wird, welche Vokabularien entwickelt werden sollen, um die nächste Generation der Population zu bilden.

10. Ein Verfahren gemäß Anspruch 9, bei dem die nächste Generation gebildet wird durch Ersetzen von zumindest dem am wenigsten geeigneten Vokabular durch ein Vokabular, das aus zumindest einem der gehaltenen Vokabularien hergeleitet wird.

**11.** Ein Verfahren gemäß Anspruch 10, bei dem zumindest einige der Wörter (W) der gehaltenen Vokabularien einer Entwicklung durch genetische Operationen mit anderen Wörtern aus dem selben oder unterschiedlichen Vokabularien unterliegen.

**12.** Ein Verfahren gemäß einem der vorangehenden Ansprüche, bei dem die Eignungsfunktion ein Maß (*f*1) der Leichtigkeit einer korrekten Erkennung eines Kandidatenkunstsprachenworts (W) aufweist, wenn es in ein Spracherkennungssystem (34) gesprochen wird.

**13.** Ein Verfahren gemäß einem der Ansprüche 1 bis 11, bei dem die Eignungsfunktion ein Maß (f2) der Ähnlichkeit des Kandidatenkunstsprachenworts (W) zu einem zugehörigen Wort eines Satzes von Referenzwörtern aufweist, gemessen durch ein Spracherkennungssystem (34), in das das Wort gesprochen wird.

**14.** Ein Verfahren gemäß einem der Ansprüche 1 bis 11, bei dem die Eignungsfunktion eine Kombination aufweist aus:

einem Maß (*f*1) der Leichtigkeit der korrekten Erkennung eines Kandidatenkunstsprachenworts (W), wenn es in ein Spracherkennungssystem (34) gesprochen wird; und

einem Maß (f2) der Ähnlichkeit eines Kandidatenkunstsprachenworts (W) zu einem zugehörigen Wort eines Satzes von Referenzwörtern gemessen durch ein Spracherkennungssystem (34), in das das Wort gesprochen wird.

**15.** Ein Verfahren gemäß einem der Ansprüche 12 bis 14, bei dem die Kandidatenkunstsprachenwörter (W) in das Spracherkennungssystem (34) durch mehrere Text-Zu-Sprache-Wandler (33) abwechselnd gesprochen werden, wobei das Eignungsmaß (*f*1; *f*2) im Hinblick darauf hergestellt wird, daß ein bestimmtes Wort eine Kombination der Maße ist, die für das Sprechen des Worts durch jeden Wandler gemacht werden.

**16.** Ein Verfahren gemäß einem der Ansprüche 12 bis 14, bei dem die Kandidatenkunstsprachenwörter (W) durch ein Text-Zu-Sprache-Umwandlungssystem (33) in das Spracherkennungssystem (34) gesprochen werden, wobei der Kanal, der diese Systeme umfaßt, auf eine derartige Weise implementiert ist, daß das Eignungsmaß zumindest eine gewünschte Operationscharakteristik berücksichtigt.

**17.** Ein Verfahren gemäß Anspruch 16, bei dem die zumindest eine gewünschte Operationscharakteristik mindestens eine ist aus:

Geschlechtsunabhängigkeit, wobei zu diesem Zweck das Text-Zu-Sprache-System mit mehreren Text-Zu-Sprache-Wandlern versehen ist, die unterschiedlichen Geschlechtern entsprechen, um gesprochene Versionen der Wörter zu erzeugen;

akustischer Unabhängigkeit, wobei zu diesem Zweck das Spracherkennungssystem mit mehreren Spracherkennern versehen ist, die unterschiedlichen akustischen Modellen entsprechen;

Robustheit gegenüber Rauschen, wobei zu diesem Zweck Rauschen in den Kanal eingebracht wird.

**18.** Ein Verfahren gemäß einem der vorangehenden Ansprüche, bei dem die Entwicklung der Individuen (41; 51), die ausgewählt sind, um die nächste Generation zu bilden, auf eine Weise bewirkt wird, die die Erzeugung von Kandidatenkunstsprachenwörtern bevorzugt, die eine gewünschte Charakteristik aufweisen.

**19.** Ein Verfahren gemäß Anspruch 18, bei dem die gewünschte Charakteristik eine Leichtigkeit der Erkennung durch einen automatischen Spracherkenner ist.

**20.** Ein Verfahren gemäß Anspruch 18, bei dem die gewünschte Charakteristik Ähnlichkeit zu Wörtern der natürlichen Sprache ist.

**21.** Ein Verfahren gemäß einem der vorangehenden Ansprüche, bei dem zumindest ausgewählte Individuen der qbschließenden Generation von Individuen auf einem übertragbaren Speicherungsmedium gespeichert sind.

**22.** Ein Verfahren gemäß einem der vorangehenden Ansprüche, bei dem die Individuen (41; 51) der abschließenden Generation verwendet werden, um Kunstsprachenwörter zu liefern, und Darstellungen dieser Wörter auf einem übertragbaren Speicherungsmedium gespeichert werden.

**23.** Ein Verfahren zum Konditionieren eines Spracherkenners, das folgende Schritte aufweist:

Erzeugen von Wörtern (W) einer Kunstsprache unter Verwendung eines Verfahrens gemäß einem der vorangehenden Ansprüche, und

Laden der erzeugten Wörter der Kunstsprache in ein Lexikon des Spracherkenners.

24. Ein Verfahren zum Konditionieren eines Spracherkenners, das folgende Schritte aufweist:

Erzeugen von Kunstsprachenwörtern (W) unter Verwendung eines Verfahrens gemäß einem der vorangehenden Ansprüche, und

Trainieren des Spracherkenners, um die erzeugten Kunstsprachenwörter zu erkennen.

25. Vorrichtung zum Erzeugen einer Kunstsprache, die folgende Merkmale aufweist:

eine Speicherungseinrichtung zum Speichern einer Population (40; 50) von Individuen (41; 51), und

eine Genetischer-Algorithmus-Verarbeitungseinrichtung, die folgende Merkmale aufweist:

eine Bereitstellungseinrichtung zum Bereitstellen von Kandidatenkunstsprachenwörtern (W) von den Individuen (41; 51) der Population (40; 50), die in der Speicherungseinrichtung gespeichert sind;

eine Bewertungseinrichtung (38) zum Bewerten der Kandidatenkunstsprachenwörter unter Verwendung einer vorbestimmten Eignungsfunktion;

eine Entwicklungseinrichtung (45; 55), die auf die Entwicklung anspricht, die durch Bewertungseinrichtung (38) ausgeführt wird, um Individuen aus der Population (40; 50) auszuwählen und um dieselben beim Bilden einer nächsten Generation der Population zu verwenden, die dann zurück in die Speicherungseinrichtung gespeichert wird; und

eine Steuerungseinrichtung (49; 59) zum Steuern der Operation der Verarbeitungseinrichtung zum Entwickeln der Population (40; 50) von Individuen (41; 51) über eine Mehrzahl von Generationen.

26. Vorrichtung gemäß Anspruch 25, bei der die Individuen (41) Kandidatenkunstsprachenwörter sind, wobei die Entwicklungseinrichtung (45) betreibbar ist, um die geeignetsten Wörter jeder Generation zu verwenden, um die Wörter (W) der nächsten Generation durch einen Prozeß herzustellen, der zumindest entweder Mutation oder Kreuzung umfaßt.

27. Vorrichtung gemäß Anspruch 26, bei der die Entwicklungseinrichtung (45) gezwungen ist, zu verursachen, daß jedes Nächste-Generation-Wort ein Format aufweist, in dem jeder zugehörige Konsonant oder Vokal, außer am Ende des Worts, jeweils von einem Vokal oder Konsonanten gefolgt wird.

28. Vorrichtung gemäß Anspruch 26, bei der jede Generation der Population (40) aus L-Individuen hergestellt ist, wobei die Vorrichtung ferner eine Einrichtung (48) aufweist, die betreibbar ist, um die K geeignetsten Wörter der letzten Generation der Population auszuwählen, um das Vokabular der Kunstsprache zu bilden, wobei L größer ist als *K*.

29. Vorrichtung gemäß Anspruch 25, bei der die Individuen (51) Prozeßvorschriften zum Bilden jeweiliger Vokabularien aus Kandidatenkunstsprachenwörtern (W) sind und wobei bei jeder Generation:

die Bereitstellungseinrichtung betreibbar ist, um jede Prozeßvorschrift (51) zu verwenden, um ein jeweiliges Vokabular (52) zu bilden;

die Bewertungseinrichtung (38) betreibbar ist, um die vorbestimmte Eignungsfunktion zu verwenden, um die zugehörigen Wörter (W) jedes Vokabulars (52) zu bewerten, das durch die Bereitstellungseinrichtung gebildet wird, und die Bewertungen der Wörter in jedem Vokabular zu verwenden, um eine Bewertung der Eignung der entsprechenden Prozeßvorschrift (51) herzustellen; und

die Entwicklungseinrichtung (55) betreibbar ist, um die geeignetsten Prozeßvorschriften jeder Generation zu verwenden, um die Prozeßvorschriften (51) der nächsten Generation herzustellen, durch einen Prozeß, der zumindest entweder Mutation oder Kreuzung umfaßt.

30. Vorrichtung gemäß Anspruch 29, bei der jede Prozeßvorschrift (51) ein Wortformat und einen Satz von Konsonanten und einen Satz von Vokalen spezifiziert, die zur Verwendung bei der Worterzeugung gemäß dem Format verfügbar sind.

31. Vorrichtung gemäß Anspruch 30, bei der das Wortformat eine spezifizierte Einheit-Form und eine spezifizierte Anzahl von Einheiten aufweist, wobei die Einheiten aus den verfügbaren Konsonanten und Vokalen gemäß der spezifizierten Einheit-Form gebildet sind.

32. Vorrichtung gemäß Anspruch 29, die ferner eine Vergleichseinrichtung aufweist, die betreibbar ist, um die geeignetste Prozeßvorschrift oder Prozeßvorschriften jeder Generation mit denen von zumindest der nächsten Generation zu vergleichen.

33. Vorrichtung gemäß Anspruch 25, bei der die Individuen jeweilige Vokabularien von Kandidatenkunstsprachenwörtern (W) sind, wobei die Bewertungseinrichtung (38) betreibbar ist, um die Eignung der Wörter in dem Vokabular zu bewerten und basierend auf diesen Bewertungen ein Gesamteignungsmaß für dieses Vokabular zu bilden; wobei die Bewertungseinrichtung betreibbar ist, um dieses Eignungsmaß von jedem Vokabular als eine Basis zum Auswählen zu verwenden, welche Vokabularien entwickelt werden sollen, um die nächste Generation der Population zu bilden.

34. Vorrichtung gemäß Anspruch 33, bei der die Entwicklungseinrichtung betreibbar ist, um die nächste Generation zu bilden, durch Ersetzen von zumindest dem am wenigsten geeigneten Vokabular durch ein Vokabular, das aus zumindest einem der gehaltenen Vokabularien hergeleitet wird.

35. Vorrichtung gemäß Anspruch 34, bei der die Entwicklungseinrichtung betreibbar ist, um zumindest einige der Wörter der behaltenen Vokabularien durch genetische Operationen mit anderen Wörtern aus demselben oder aus unterschiedlichen Vokabularien zu entwickeln.

36. Vorrichtung gemäß einem der Ansprüche 25 bis 35, bei der die Bewertungseinrichtung (38) ein Spracherkennungssystem (34) umfaßt, wobei die Bewertungseinrichtung betreibbar ist, um ein Maß ($f1$) der Leichtigkeit der korrekten Erkennung eines Kandidatenkunstsprachenworts (W), wenn es in das Spracherkennungssystem (34) gesprochen wird, herzuleiten und als zumindest einen Teil der Eignungsfunktion und zu verwenden.

37. Vorrichtung gemäß einem der Ansprüche 25 bis 35, bei der die Bewertungseinrichtung ein Spracherkennungssystem (34) umfaßt, wobei die Bewertungseinrichtung betreibbar ist, um ein Maß (f2) der Ähnlichkeit eines Kandidatenkunstsprachenworts (W), das in das Spracherkennungssystem (34) gesprochen wird, zu einem zugehörigen Wort eines Satzes von Referenzwörtern gemessen durch das Spracherkennungssystem (34) herzuleiten und als zumindest einen Teil der Eignungsfunktion zu verwenden.

38. Vorrichtung gemäß einem der Ansprüche 25 bis 35, bei der die Bewertungseinrichtung ein Spracherkennungssystem (34) umfaßt, wobei die Bewertungseinrichtung betreibbar ist, um in Kombination für die Eignungsfunktion eine Kombination aus den nachfolgenden herzuleiten und zu verwenden:

einem Maß ($f1$) der Leichtigkeit der korrekten Erkennung eines Kandidatenkunstsprachenworts (W), wenn es in das Spracherkennungssystem (34) gesprochen wird; und

einem Maß (f2) der Ähnlichkeit eines Kandidatenkunstsprachenworts (W), das in das Spracherkennungssystem (34) gesprochen wird, zu einem zugehörigen Wort eines Satzes von Referenzwörtern gemessen durch das Spracherkennungssystem.

39. Vorrichtung gemäß einem der Ansprüche 36 bis 38, bei der die Bewertungseinrichtung ferner mehrere Text-Zu-Sprache-Wandler (33) umfaßt, die betreibbar sind, um Kandidatenkunstsprachenwörter (W) abwechselnd in das Spracherkennungssystem (34) zu sprechen, wobei das Eignungsmaß ($f1$; f2) im Hinblick auf ein bestimmtes Wort hergestellt wird, das eine Kombination der Maße ist, die für das Sprechen des Worts durch jeden Wandler hergestellt werden.

40. Vorrichtung gemäß einem der Ansprüche 36 bis 38, bei der die Bewertungseinrichtung ferner ein Text-Zu-Sprache-Umwandlersystem (33) umfaßt, das betreibbar ist, um die Kandidatenkunstsprachenwörter (W) in das Spracherkennungssystem (34) zu sprechen, wobei der Kanal, der diese Systeme umfaßt, auf eine solche Weise implementiert ist, daß das Eignungsmaß zumindest eine gewünschte Operationscharakteristik berücksichtigt.

41. Vorrichtung gemäß Anspruch 40, bei der die zumindest eine gewünschte Operationscharakteristik zumindest eine ist aus:

Geschlechtsunabhängigkeit, wobei zu diesem Zweck das Text-Zu-Sprache-System mit mehreren Text-Zu-Sprache-Wandlern versehen ist, die unterschiedlichen Geschlechtern entsprechen, um gesprochene Versionen der Wörter zu erzeugen;

akustischer Unabhängigkeit, wobei zu diesem Zweck das Spracherkennungssystem mit mehreren Spracherkennern versehen ist, die unterschiedlichen akustischen Modellen entsprechen;

Robustheit gegen Rauschen, wobei zu diesem Zweck Rauschen in den Kanal eingebracht wird.

42. Vorrichtung gemäß einem der Ansprüche 25 bis 41, bei der die Entwicklungseinrichtung (45; 55) betreibbar ist, um die Individuen zu entwickeln, die ausgewählt sind, um die nächste Generation auf eine Weise zu bilden, die die Erzeugung von Kandidatenkunstsprachenwörter (W) unterstützt, die eine gewünschte Charakteristik aufweisen.

**43.** Vorrichtung gemäß Anspruch 42, bei der die gewünschte Charakteristik eine Leichtigkeit der Erkennung durch einen automatischen Spracherkenner ist.

**44.** Vorrichtung gemäß Anspruch 42, bei der die gewünschte Charakteristik Ähnlichkeit zu Wörtern der natürlichen Sprache ist.

**Revendications**

**1.** Un procédé de génération d'un langage artificiel dans lequel un algorithme génétique est utilisé pour provoquer une évolution d'une population (40; 50) d'individus (41; 51) sur une série de générations, les individus formant ou étant utilisés pour former des mots candidats (W) d'un langage artificiel qui sont évalués en déterminant une fonction prédéterminée d'aptitude, les résultats (39) de cette évaluation étant utilisés par l'algorithme génétique (45; 55) pour sélectionner des individus qui évolueront pour former la génération suivante de la population (40; 50).

**2.** Un procédé selon la revendication 1, dans lequel lesdits individus (41) sont des mots candidats d'un langage artificiel, les mots les plus aptes (W) de chaque génération étant utilisés pour produire les mots de la génération suivante par un traitement (45) qui implique au moins une mutation et/ou un croisement.

**3.** Un procédé selon la revendication 2, dans lequel la production de mots de la génération suivante est contrainte à amener chacun de ces mots (W) à présenter un format dans lequel chaque consonne ou voyelle constituante, sauf si elle termine le mot, est respectivement suivie par une voyelle ou une consonne.

**4.** Un procédé selon la revendication 2, dans lequel chaque génération de ladite population (40) consiste en L individus (41), le procédé incluant une étape finale de sélection des K mots les plus aptes de la dernière génération de la population (40) pour former le vocabulaire du langage artificiel, L étant supérieur à K.

**5.** Un procédé selon la revendication 1, dans lequel lesdits individus (51) sont des recettes de formation de vocabulaires respectifs (52) de mots candidats (W) de langage artificiel, le procédé impliquant à chaque génération les étapes consistant à:

- utiliser chaque individu (51) pour former un vocabulaire respectif (52) dont les mots constituants (W) sont évalués en utilisant ladite fonction prédéterminée d'aptitude;
- former à partir des évaluations des mots dans le vocabulaire d'un individu, une évaluation de l'aptitude des individus (51); et
- uLiliser les recettes les plus aptes (51) de chaque génération pour produire les recettes de la génération suivante par un traitement (55) qui implique au moins une mutation et/ou un croisement.

**6.** Un procédé selon la revendication 5, dans lequel chaque recette (51) spécifie un format de mot, et un ensemble de consonnes et un ensemble de voyelles disponibles pour utilisation dans la génération de mots conformément audit format.

**7.** Un procédé selon la revendication 6, dans lequel chacun desdits formats de mots comprend une forme unitaire spécifiée et un nombre spécifié d'unités, lesdites unités étant formées à partir des consonnes et voyelles disponibles conformément à la forme unitaire spécifiée.

**8.** Un procédé selon la revendication 5, dans lequel la recette ou les recettes les plus aptes (51) de chaque génération sont enreqistrées pour une comparaison ultérieure avec celles d'au moins la génération suivante.

**9.** Un procédé selon la revendication 1, dans lequel lesdits individus sont des vocabulaires respectifs de mots candidats de langage artificiel, l'aptitude des mots (W) dans l'un desdits vocabulaires étant évaluée et utilisée pour former une mesure globale d'attitude pour ce vocabulaire, cette mesure étant ensuite utilisée comme base pour sélectionner quels vocabulaires doivent évoluer afin de former la génération suivante de la population.

**10.** Un procédé selon la revendication 9 dans lequel la génération suivante est formée en remplaçant au moins le vocabulaire le moins apte par un vocabulaire dérivé d'au moins l'un des vocabulaires retenus.

**11.** Un procédé selon la revendication 10, dans lequel au moins certains des mots (W) des vocabulaires retenus sont sujets à évolution par des opérations génétiques avec d'autres mots provenant du même vocabulaire ou de vocabulaires différents.

**12.** Un procédé selon l'une quelconque des revendications précédentes, dans lequel ladite fonction d'aptitude comprend une mesure (*f*1) de la facilité de reconnaissance correcte d'un mot candidat (W) du langage artificiel lorsqu'il est prononcé à un système de reconnaissance (34) de parole.

**13.** Un procédé selon l'une quelconque des revendications 1 à 11, dans lequel ladite fonction d'aptitude comprend une mesure (*f*2) de la similitude entre un mot candidat (W) du langage artificiel et un mot constituant quelconque d'un ensemble de mots de références, telle qu'elle est mesurée par un système de reconnaissance (34) de la parole auquel ledit mot est prononcé.

**14.** Un procédé selon l'une quelconque des revendications 1 à 11, dans lequel ladite fonction d'aptitude comprenant une combinaison de:

-   une mesure (*f*1) de la facilité de reconnaissance correcte d'un mot candidat (W) du langage artificiel lorsqu'il est prononcé à un système de reconnaissance (34) de parole; et
-   une mesure (*f*2) de la similitude entre un mot candidat (W) du langage artificiel et un mot constituant quelconque d'un ensemble de mots de références, telle qu'elle est mesurée par un système de reconnaissance (34) de la parole auquel ledit mot est prononcé.

**15.** Un procédé selon l'une quelconque des revendications 12 à 14, dans lequel les mots candidats (W) du langage artificicl sont prononcés à tour de rôle au système de reconnaissance (34) de la parole par de multiples convertisseurs (33) de texte à parole, la mesure d'aptitude (*f*1; *f*2) effectuée en ce qui concerne un mot particulier quelconque étant une combinaison des mesures effectuées pour la prononciation du mot par chaque convertisseur.

**16.** Un procédé selon l'une quelconque des revendications 12 à 14, dans lequel les mots candidats (W) du langage artificiel sont prononcés au système de reconnaissance (34) de la parole par des systèmes de conversion (33) de texte à parole, le canal impliquant ces systèmes étant mis en application d'une manière telle que ladite mesure d'aptitude prend en compte au moins une caractéristique opérationnelle souhaitée.

**17.** Un procédé selon la revendication 16, dans lequel ladite caractéristique opérationnelle souhaitée unique au moins est au moins l'une des caractéristiques suivantes :

-   indépendance vis-à-vis du genre, le système de texte à parole comprenant à cet effet de multiples convertisseurs de texte à parole correspondant à des genres différents pour engendrer des versions prononcées des mots;
-   indépendance vis-à-vis de l'acoustique, le système de reconnaissance de la parole comprenant à cet effet de multiples dispositifs de reconnaissance de la parole correspondant à différents modèles acoustiques;
-   robustesse vis-à-vis du bruit, un bruit étant introduit à cet effet dans le canal.

**18.** Un procédé selon l'une quelconque des revendications précédentes, dans lequel l'évolution des individus (41; 51) sélectionnés pour former la génération suivante est effectuée d'une manière qui favorise la création de mots candidats de langage artificiel qui possèdent une caractéristique souhaitée.

**19.** Un procédé selon la revendication 18, dans lequel ladite caractéristique souhaitée est la facilité de reconnaissance par un dispositif de reconnaissance automatique de la parole.

**20.** Un procédé selon la revendication 18, dans lequel ladite caractéristique souhaitée est la similitude avec des mots de langages naturels.

**21.** Un procédé selon l'une quelconque des revendications précédentes, dans lequel au moins certains individus sélectionnés de la génération finale sont enregistrés sur un support d'enregistrement transférable.

**22.** Un procédé selon l'une quelconque des revendications précédentes dans lequel la génération finale d'individus (41; 51) est utilisée pour produire des mots dudit langage artificiel et des représentations de ces mots enregistrées sur un support d'enregistrement transférable.

**23.** Un procédé de conditionnement d'un dispositif de reconnaissance de la parole, qui comprend les étapes consistant à:

-   engendrer des mots (W) d'un langage artificiel en utilisant un procédé conforme à l'une quelconque des revendications précédentes, et
-   charger les mots enqendrés du langage artificiel dans un lexique du dispositif de reconnaissance de la parole.

**24.** Un procédé de conditionnement d'un dispositif de reconnaissance de la parole qui comprend les étapes consistant à:

-   engendrer des mots (W) d'un langage artificiel en utilisant un procédé conforme à l'une quclconque des revendications précédentes, et

- entraîner le dispositif de reconnaissance de la parole à reconnaître les mots engendrés du langage artificiel.

25. Appareil de génération d'un langage artificiel qui comprend :

- un moyen d'enregistrement pour enregistrer une population (40; 50) d'individus (41; 51), et
- un moyen de traitement d'algorithmes génétiques qui comprend:

    - un moyen de production pour produire des mots candidats (W) de langage artificiel à partir des individus (41; 51) de la population (40; 50) enregistrée dans le moyen d'enregistrement;
    - un moyen d'évaluation (38) pour évaluer les mots candidats de langage artificiel en utilisant une fonction prédéterminée d'aptitude;
    - un moyen d'évolution (45; 55) qui répond à l'évaluation exécutée par le moyen d'évaluation (38) pour sélectionner des individus dans ladite population (40; 50) et pour les utiliser pour former une génération suivante de la population qui est ensuite enregistrée en retour dans le moyen d'enregistrement; et
    - un moyen de commande (49; 59) pour commander le fonctionnement du moyen de traitement pour provoquer l'évolution de la population (40; 50) d'individus (41; 51) sur une série de générations.

26. Appareil selon la revendication 25, dans lequel lesdits individus (41) sont des mots candidats de langage artificiel, le moyen d'évolution (45) pouvant intervenir pour utiliser les mots les plus aptes de chaque génération pour produire les mots (W) de la génération suivante par un traitement qui implique au moins une mutation et/ou un croisement.

27. Appareil selon la revendication 26, dans lequel le moyen d'évolution (45) est contraint à amener chaque mot de la génération suivante à présenter un format dans lequel chaque consonne ou voyelle constituante, sauf si elle termine le mot, est respectivement suivie par une voyelle ou une consonne.

28. Appareil selon la revendication 26, dans lequel chaque génération de ladite population (40) consiste en L individus, le procédé comprenant en outre un moyen (48) qui peut interveni r pour sélectionner les K mots les plus aptes de la dernière génération de la population pour former le vocabulaire du langage artificiel, L étant supérieur à K.

29. Appareil selon la revendication 25, dans lequel lesdits individus (51) sont des recettes de formation de vocabulaires respectifs de mots candidats (W) de langage artificiel, et dans lequel à chaque génération:

- ledit moyen de production peut intervenir pour utiliser chaque recette (51) pour former un vocabulaire respectif (52)
- ledit moyen d'évaluation (38) peut intervenir pour utiliser ladite fonction prédéterminée d'aptitude pour évaluer les mots constituants (W) de chaque vocabulaire (52) formé par le moyen de production et pour utiliser les évaluations des mots de chaque vocabulaire pour produire une évaluation de l'aptitude de la recette correspondante (51); et
- le moyen d'évolution (55) peut intervenir pour utiliser les recettes les plus aptes de chaque génération pour produire les recettes (51) de la génération suivante par un traitement qui implique au moins une mutation et/ou un croisement.

30. Appareil selon la revendication 29, dans lequel chaque recette (51) spécifie un format de mot, et un ensemble de consonnes et un ensemble de voyelles disponibles pour utilisation dans la génération de mots conformément audit format.

31. Appareil selon la revendication 30, dans lequel ledit format de mots comprend une forme unitaire spécifiée et un nombre spécifié d'unités, lesdites unités étant formées à partir des consonnes et voyelles disponibles conformément à la forme unitaire spécifiée.

32. Appareil selon la revendication 29, qui comprend en outre un moyen de comparaison qui peut intervenir pour comparer la recette ou les recettes les plus aptes de chaque génération avec celles d'au moins la génération suivante.

33. Appareil selon la revendication 25, dans lequel lesdits individus sont des vocabulaires respectifs de mots candidats (W) de langage artificiel, le moyen d'évaluation (38) pouvant intervenir pour évaluer l'aptitude des mots de l'un desdits vocabulaires et pour former, sur la base de ces évaluations, une mesure globale d'aptitude pour ce vocabulaire; le moyen d'évolution pouvant intervenir pour utiliser cette mesure d'aptitude de chaque vocabulaire comme base pour sélectionner quels vocabulaires doivent évoluer afin de former la génération suivante de la population.

34. Appareil selon la revendication 33, dans lequel le moyen d'évolution peut intervenir pour former la génération suivante en remplaçant au moins le vocabulaire le moins apte par un vocabulaire dérivé d'au moins l'un des vocabulaires retenus.

35. Appareil selon la revendication 34, dans lequel le moyen d'évolution peut intervenir pour faire évoluer au moins certains des mots des vocabulaires retenus par des opérations génétiques avec d'autres mots provenant du même vocabulaire ou de vocabulaires différents.

36. Appareil selon l'une quelconque des revendications 25 à 35, dans lequel le moyen d'évaluation (38) inclut un système de reconnaissance (34) de la parole, le moyen d'évaluation pouvant intervenir pour dériver et utiliser au moins une partie de ladite fonction d'aptitude, une mesure (*f*1) de la facilité de reconnaissance correcte d'un mot candidat (W) du langage artificiel lorsqu'il est prononcé à un système de reconnaissance (34) de parole.

37. Appareil selon l'une quelconque des revendications précédentes 25 à 35, dans lequel le moyen d'évaluation inclut un système de reconnaissance (34) de la parole, le moyen d'évaluation pouvant intervenir pour dériver et utiliser au moins une partie de ladite fonction d'aptitude, une mesure (*f*2) de la similitude entre un mot candidat (W) du langage artificiel prononcé audit système de reconnaissance (34) de la parole et un mot constituant quelconque d'un ensemble de mots de références, telle qu'elle est mesurée par ledit système de reconnaissance (34) de la parole.

38. Appareil selon l'une quelconque des revendications 25 à 35, dans lequel le moyen d'évaluation inclut un système de reconnaissance (34) de la parole, le moyen d'évolution pouvant intervenir pour dériver et utiliser en combinaison pour ladite fonction d'aptitude une combinaison de:

   - une mesure (*f*1) de la facilité de reconnaissance correcte d'un mot candidat (W) du langage artificiel lorsqu'il est prononcé à un système de reconnaissance (34) de parole; et
   - une mesure (*f*2) de la similitude entre un mot candidat (W) du langage artificiel prononcé audit système de reconnaissance (34) de la parole et un mot constituant quelconque d'un ensemble de mots de références, telle qu'elle est mesurée par ledit système de reconnaissance de la parole.

39. Appareil selon l'une quelconque des revendications 36 à 38, dans lequel le moyen d'évaluation comprend en outre de multiples convertisseurs (33) de texte à parole qui peuvent intervenir pour prononcer à tour de rôle les mots candidats (W) du langage artificiel au système de reconnaissance (34) de la parole, la mesure d'aptitude (*f*1; *f*2) effectuée en ce qui concerne un mot particulier quelconque étant une combinaison des mesures effectuées pour la prononciation du mot par chaque convertisseur.

40. Appareil selon l'une quelconque des revendications 36 à 39, dans lequel le moyen d'évaluation inclut en outre un système de convertisseurs (33) de texte à parole qui peut intervenir pour prononcer les mots candidats (W) du langage artificiel au système de reconnaissance (34) de la parole, le canal impliquant ces systèmes étant mis en application d'une manière telle que ladite mesure d'aptitude prend en compte au moins une caractéristique opérationnelle souhaitée.

41. Appareil selon la revendication 40, dans lequel ladite caractéristique opérationnelle souhaitée unique au moins est au moins l'une des caractéristiques suivantes :

   - indépendance vis-à-vis du genre, le système de texte à parole comprenant à cet effet de multiples convertisseurs de texte à parole correspondant à des genres différents pour engendrer des versions prononcées des mots;
   - indépendance vis-à-vis de l'acoustique, le système de reconnaissance de la parole comprenant à cet effet de multiples dispositifs de reconnaissance de la parole correspondant à différents modèles acoustiques;
   - robustesse vis-à-vis du bruit, un bruit étant introduit à cet effet dans le canal.

42. Appareil selon l'une quelconque des revendications 25 à 41, dans lequel le moyen d'évolution (45; 55) peut intervenir pour provoquer l'évolution des individus sélectionnés pour former la génération suivante d'une manière qui favorise la création de mots candidats de langage artificiel qui possèdent une caractéristique souhaitée.

43. Appareil selon la revendication 42, dans lequel ladite caractéristique souhaitée est la facilité de reconnaissance par un dispositif de reconnaissance automatique de la parole.

44. Appareil selon la revendication 42, dans lequel ladite caractéristique souhaitée est la similitude avec des mots de langages naturels.

23

24

22

PHONEMES   MEMORY   NEW CPL

CPL CREATION
APPLICATION

21

20

25

27

2

26

# Figure 1

Figure 2

Figure 3

**Figure 4**